# EUROPEAN PATENT APPLICATION

(11) **EP 4 821 754 A1**
(43) Date of publication of application: **14.10.2026**
(21) Application number: 24950378.0
(22) Date of filing: 22.10.2024
(51) Int. Cl.: B60N 2/28

(54) **PULL-AND-ROTATE BASE APPARATUS OF CHILD SAFETY SEAT**

(30) Priority: 08.08.2024 CN 202411087146
(71) Applicant: Jiangsu Ican New Material Technology Co., Ltd, Yangzhou, Jiangsu 225000 (CN)
(72) Inventor: BAI, Dongdong, Yangzhou, Jiangsu 225000 (CN); LI, Jia, Yangzhou, Jiangsu 225000 (CN)
(74) Representative: Ran, Handong
(86) International application number: PCT/CN2024/126290
(87) International publication number: WO 2026/031352

(57) **Abstract**

A pull-and-rotate base apparatus of a child safety seat, relating to the technical field of children's products and equipment. The apparatus comprises a base (1), a pull-and-rotate seat (2), and an unlocking structure (14). The pull-and-rotate seat (2) is arranged above the base (1), and is engaged with the base (1). The pull-and-rotate seat (2) is capable of rotating relative to the base (1), and when rotating to the left and right sides of the base (1), the pull-and-rotate seat (2) is capable of translating relative to the base (1). The unlocking structure (14) is arranged between the base (1) and the pull-and-rotate seat (2), and is used for being engaged with the pull-and-rotate seat (2) to release or restrict the rotation of the pull-and-rotate seat (2). In the apparatus, a rotation side rail and translation side rails are provided on the base, to simultaneously achieve a rotation function and a translation function of the pull-and-rotate seat. The apparatus has a simple structure and is convenient to use.

## Description

### TECHNICAL FIELD

The present disclosure relates to the technical field of children's products and appliances, and specifically, to a pull-out and rotating base device of a child seat.

### BACKGROUND

In order to satisfy the travel, dining, and other daily needs of parents and children, a child safety carrier is generally mounted on a child stroller as a part of the child stroller, or mounted on a child safety seat as a part of the child safety seat. During use, a child safety carrier is usually used in combination with a base. The base serves as a base body of the child carrier or the child safety seat, and the child carrier is placed on the base and is locked in mating engagement. In order to ensure safety during use, a firm connection between the child carrier and the base body is critical. In the existing child safety seats, the connection is usually achieved by means of the elastic force of plastic materials or tightening clamps. However, these methods provide insufficient connection firmness, resulting in insufficient safety performance.

In order to solve the problems existing in the related art, those skilled in the art have made numerous attempts. For example, the Chinese Patent Application Publication No. CN 116373706 A discloses a child car seat with a lateral shifting function. The rotating base drives the sliding base to rotate to a desired orientation, thereby facilitating placing the child into or lifting the child out of the vehicle seat and improving the user experience. However, this child car seat has a relatively complicated structure and insufficient operation convenience.

### SUMMARY

To solve the above-described problems, the present disclosure provides a pull-out and rotating base device of a child seat. A rotating side rail and a translating side rail are disposed on the base to enable the rotational and translational movements of the pull-out and rotating seat simultaneously. The device has a simple structure and convenient operation.

In order to achieve the above-described objectives, the present disclosure proposes the technical solutions below.

A pull-out and rotating base device of a child seat is provided. The device includes a base, a pull-out and rotating seat, and an unlocking structure. The pull-out and rotating seat is disposed between the base and the pull-out and rotating seat, and the pull-out and rotating seat cooperates with the base. The pull-out and rotating seat is rotatable relative to the base, and when the pull-out and rotating seat is rotated to left and right sides of the base, the pull-out and rotating seat is translatable relative to the base. The unlocking structure is disposed on the base, and the unlocking structure is configured to cooperate with the pull-out and rotating seat to release or restrict rotation of the pull-out and rotating seat.

Further, a rotating side rail is disposed on the base, an opening is formed on each of the left and right sides of the rotating side rail, a translating side rail is disposed on each of two sides of the opening, and the pull-out and rotating seat cooperates with the rotating side rail and the translating side rail.

Further, a first clamping portion is disposed on each of front and rear sides of the rotating side rail, a second clamping portion is disposed on each of front and rear sides of the pull-out and rotating seat, and the first clamping portion and the second clamping portion cooperate with each other to prevent the pull-out and rotating seat from being separated from the base during rotation.

Further, an upper end of the translating side rail is provided with a ledge portion, a side wing is disposed on each of the left and right sides of the pull-out and rotating seat, and the ledge portion cooperates with the side wing to prevent the pull-out and rotating seat from being separated from the base during translation.

Further, an upper portion of the side wing extends outward to form a limit portion, and when the pull-out and rotating seat is translated to a limit distance, the limit portion abuts against an inner side surface of the translating side rail to prevent the pull-out and rotating seat from being pulled out excessively.

Further, a central rotating rail is disposed on the base, a bottom of the pull-out and rotating seat is provided with a U-shaped groove, a curvature of the U-shaped groove is identical to a curvature of the central rotating rail, and when the pull-out and rotating seat is retracted, the central rotating rail abuts against the U-shaped groove to prevent the pull-out and rotating seat from translating excessively during retraction.

Further, a central wing is disposed on each of two sides of the central rotating rail, a pull-out sliding groove is disposed on each of two sides of the U-shaped groove, and the pull-out sliding groove and the central wing cooperate with each other to prevent the pull-out and rotating seat from tilting upward during translation.

Further, the bottom of the pull-out and rotating seat is further provided with a detent pin, the detent pin is connected to the pull-out and rotating seat through a tension structure, and one side of the detent pin cooperates with left and right sides of the central rotating rail, to form a damping when the pull-out and rotating seat is rotated to the left and right sides of the base, so as to quickly locate a pull-out position.

Further, the unlocking structure includes an unlocking pin and an unlocking button, the unlocking pin is disposed within an accommodation cavity in the base, one end of the unlocking pin is connected to the unlocking button through a connection strap, a torsion spring is disposed on a side of the unlocking pin, one end of the torsion spring abuts against the unlocking pin, an unlocking groove is disposed on each of front and rear sides of the pull-out and rotating seat, and the unlocking groove is configured to cooperate with the unlocking pin to enable a locking function.

Further, the pull-out and rotating seat is provided with a reverse limiting assembly at a position corresponding to the central rotating rail. The reverse limiting assembly includes a reverse limiting button and a reverse limiting pin. The reverse limiting button is slidably connected to the pull-out and rotating seat. The reverse limiting pin includes a limiting post and a limiting body. The limiting post is disposed on each of two sides of the limiting body and abuts against one end of the reverse limiting button. An upper end of the limiting body is provided with an accommodation groove. A spring is disposed within the accommodation groove. One end of the spring abuts against the bottom surface of the accommodation groove, and the other end of the spring abuts against the pull-out and rotating seat and remains in a compressed state. When the pull-out and rotating seat is rotated to the translational position, the reverse limiting button is actuated to push the limiting post to drive the limiting post to move downward, so that the limiting body abuts against an inner edge of the central rotating rail to prevent the pull-out and rotating seat from rotating reversely. On the contrary, the limiting body moves upward away from the central rotating rail to release the restriction on reverse rotation of the pull-out and rotating seat.

The beneficial effects of the technical solutions of the present disclosure are as follows.

1. In the present disclosure, the rotating side rail and the translating side rail are disposed on the base. The first clamping portion on the rotating side rail cooperates with the second clamping portion on the pull-out and rotating seat so as to enable the connection of the pull-out and rotating seat to the base. The ledge portion on the translating side rail cooperates with the side wing of the pull-out and rotating seat, so that the pull-out and rotating seat is rotatable relative to the base and is also translatable when the pull-out and rotating seat is rotated to the perpendicular direction. The overall structure is simple, thereby improving operation convenience during use, preventing the pull-out and rotating seat from being separated from the base, and achieving stability.

2. In the present disclosure, the central rotating rail is disposed at the middle of the base, and the U-shaped groove is formed at the bottom of the pull-out and rotating seat. The central wings on two sides of the central rotating rail cooperate with the pull-out sliding grooves on two sides of the U-shaped groove, so that the pull-out and rotating seat is prevented from tilting upward during pull-out, thereby further ensuring the stability and safety of the device.

3. In the present disclosure, the unlocking structure is disposed between the base and the pull-out and rotating seat and cooperates with the pull-out and rotating seat, so that the pull-out and rotating seat can be locked when its rotation is not required, thereby preventing accidents. Moreover, the pull-out and rotating seat can be unlocked at any time as required, thereby improving the convenience in the use of the pull-out and rotating seat.

4. In the present disclosure, the detent pin is disposed on the pull-out and rotating seat and cooperates with the central rotating rail, so as to generate damping during rotation of the pull-out and rotating seat and to further quickly position the pull-out and rotating seat to the translational position during rotation, thereby improving the convenience in use.

### BRIEF DESCRIPTION OF THE DRAWINGS

In order to facilitate a clear understanding of the contents of the present disclosure, the present disclosure will be described in further detail below in conjunction with specific embodiments and the accompanying drawings.
FIG. 1 is a schematic structural diagram of a pull-out and rotating base device of a child seat according to the present disclosure.
FIG. 2 is a schematic diagram showing a positional relationship of a pull-out and rotating seat during translational movement.
FIG. 3 is a schematic structural diagram of a base.
FIG. 4 is a schematic structural diagram of a pull-out steel frame.
FIG. 5 is a schematic structural diagram of a pull-out cover plate.
FIG. 6 is a schematic structural diagram of a detent pin.
FIG. 7 is a schematic structural diagram of a reverse limiting assembly.
FIG. 8 is a schematic structural diagram of an unlocking structure.
FIG. 9 is a sectional view of an unlocking structure.

### List of reference numbers

- 1: base
- 11: rotating side rail
- 111: first clamping portion
- 12: translating side rail
- 121: ledge portion
- 13: central rotating rail
- 131: central wing
- 14: unlocking structure
- 141: unlocking pin
- 142: torsion spring
- 143: unlocking button
- 144: connection strap
- 2: pull-out and rotating seat
- 21: pull-out cover plate
- 212: side wing
- 2121: limit portion
- 22: pull-out steel frame
- 221: detent pin
- 222: bottom plate
- 223: second clamping portion
- 224: U-shaped groove
- 2241: pull-out sliding groove
- 23: reverse limiting assembly
- 232: reverse limiting pin
- 2321: limiting post
- 2322: limiting body
- 2323: accommodation groove
- 233: reverse limiting button
- 2331: pressing portion

### DETAILED DESCRIPTION

Hereinafter, the technical solutions of the present disclosure will be further described in conjunction with the accompanying drawings, but the present disclosure is not limited thereto. Any modifications or equivalent replacements made to the technical solutions of the present disclosure without departing from the spirit and scope of the technical solutions of the present disclosure shall fall within the scope of protection of the present disclosure.

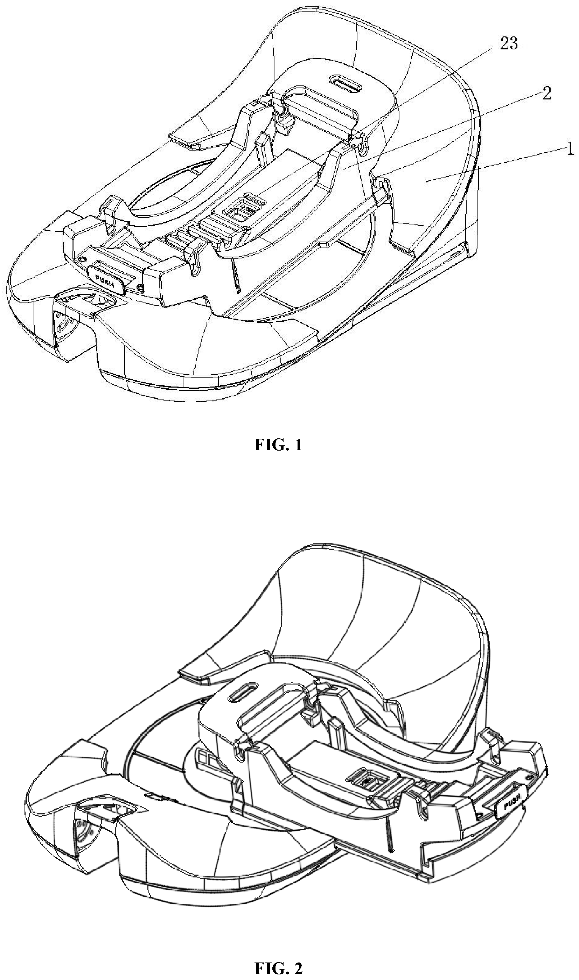

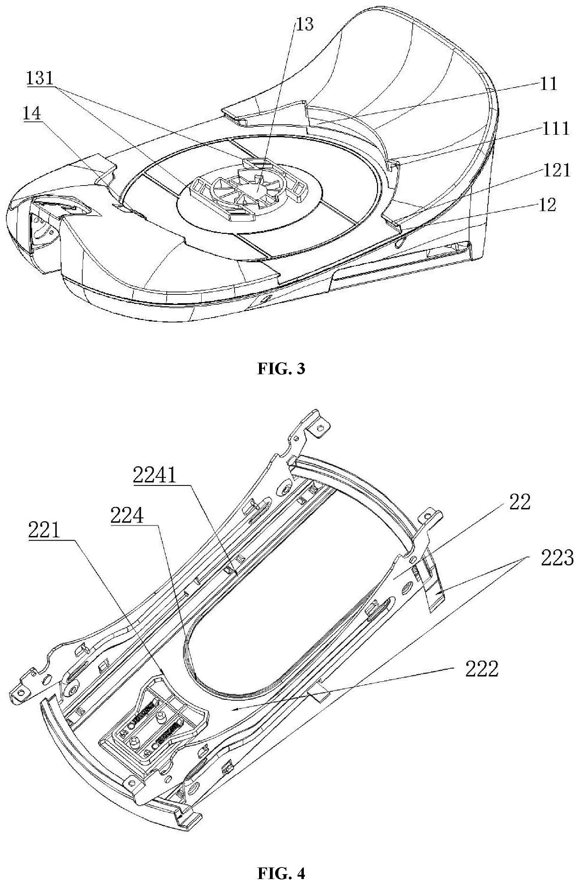

As shown in FIGS. 1 to 6, the present disclosure provides a pull-out and rotating base device of a child seat. The device includes a base 1 and a pull-out and rotating seat 2. The pull-out and rotating seat 2 is disposed on the base 1 and mutually fits with the base 1. A rotating side rail 11 is disposed on the base 1. The pull-out and rotating seat 2 cooperates with the base 1 through the rotating side rail 11 and is rotatable relative to the base 1. Openings are disposed on the left and right sides of the rotating side rail 11. Translating side rails 12 are disposed on the two sides of the opening. The translating side rail 12 cooperates with the pull-out and rotating seat 2 so that when the pull-out and rotating seat 2 is rotated to the perpendicular direction, i.e., the left-right orientation, the pull-out and rotating seat 2 is translatable along the translating side rail 12. An unlocking structure 14 is disposed on the front side of the base 1. The unlocking structure 14 cooperates with the pull-out and rotating seat 2, so as to lock the pull-out and rotating seat 2 when its rotation is not required, and unlock the pull-out and rotating seat 2 when its rotation is required.

As shown in the figures, the pull-out and rotating seat 2 includes a pull-out steel frame and a pull-out cover plate. The pull-out cover plate covers the pull-out steel frame and is fixed to the pull-out steel frame via a buckle structure or bolts. Side wings 212 are disposed on the left and right sides of the pull-out cover plate, and the front portion of the side wing 212 extends outward to form a limit portion 2121. The pull-out steel frame includes two side plates and a bottom plate. A U-shaped groove 224 is formed on the bottom plate, and pull-out sliding grooves 2241 are disposed on two sides of the U-shaped groove 224. A second clamping portion 223 is fixedly connected to both the front end and the rear end of the bottom plate. The second clamping portion is arc-shaped and has the same curvature as the rotating side rail 11, so as to cooperate with the rotating side rail 11.

First clamping portions 111 are disposed on the front and rear sides of the rotating side rail 11. The first clamping portion 111 fits with the second clamping portion 223. Engagement between the first clamping portion 111 and the second clamping portion 223 prevents the pull-out and rotating seat 2 from being separated from the base 1 during rotation, thereby ensuring the stability and safety during operation of the pull-out and rotating seat 2. The translating side rail 12 is of a recessed structure and is provided with a ledge portion 121 at the top. The ledge portion 121 cooperates with the side wings 212 on the left and right sides of the pull-out cover plate, so that during translational movement of the pull-out and rotating seat 1, the cooperation between the ledge portion 121 and the side wings 212 prevents the pull-out and rotating seat 2 from upward tilting and abnormal states, thereby ensuring stability and safety during translation of the pull-out and rotating seat 2. Moreover, during outward translation of the pull-out and rotating seat 2, the limit portion 2121 disposed on the side wing 212 moves synchronously along with the pull-out and rotating seat 2. When the end surface of the limit portion 2121 abuts against the inner side end surface of the translating side rail 12, the translational movement of the pull-out and rotating seat 2 is blocked to limit its maximum translational distance, thereby preventing the pull-out and rotating seat 2 from being pulled out excessively.

Preferably, a central rotating rail 13 is also disposed on the base 1. The central rotating rail 13 is located at the center of the rotating side rail 11 and is collinear with the translating side rail 12. The central rotating rail 13 is circular and has a curvature identical to the curvature of the arc-shaped edge of the U-shaped groove 224. The central rotating rail 13 is formed with a counterbore at the top of the the central rotating rail 13, and notches are disposed on the left and right sides of the central rotating rail 13. A vertical baffle is disposed on the front side of the notches, and the two ends of the vertical baffle are connected to the end surfaces of the notches on the left and right sides of the central rotating rail 13 respectively. Central wings 131 are disposed on the front and rear sides of the central rotating rail 13. The left and right sides of the central wing 131 are curved edges, while the front and rear sides of the central wing 131 are straight edges. A gap is reserved between the two central wings 131, and the orientation of the two central wings 131 is consistent with the orientation of the openings of the rotating side rail 11. When the pull-out and rotating seat 2 performs translational movement, the two central wings 131 cooperate respectively with the pull-out sliding grooves 2241 on the two sides of the U-shaped groove 224. Together with the translating side rail 12, they form a dual sliding tracks, which improves the sliding smoothness of the pull-out and rotating seat 2 during sliding and exerts a compressing force on the pull-out and rotating seat 2, thereby further preventing the pull-out and rotating seat 2 from upward tilting and further improving stability and safety during sliding.

Preferably, a detent pin 221 is also disposed on the bottom plate of the pull-out steel frame and is disposed at the front side of the U-shaped groove 224. The detent pin 221 includes a detent sliding block and a tension spring. The width of the detent sliding block matches the gap between the two central wings 131. The rear end of the detent sliding block is arc-shaped, and an inclined surface is connected to each end of the arc-shaped section. The front portion of the detent sliding block is provided with two elongated detent grooves, and the rear portion of the detent sliding block is provided with two hooks. A boss is disposed on the bottom plate of the pull-out steel frame, and the two hooks are fixedly disposed on the boss. The detent sliding block is disposed on the boss and is slidably connected to the bottom plate. The hooks on the bottom plate correspond to the position where the elongated detent groove is located and extends out of the elongated detent groove. One end of the tension spring is connected to the hooks on the detent sliding block, and the other end of the tension spring is connected to the hooks on the bottom plate. In an initial state, the pull-out and rotating seat 2 is disposed in the front-rear orientation; in this case, the tension spring is in a relaxed state, and the hooks on the bottom plate are located at the foremost end of the elongated detent groove. When the pull-out and rotating seat 2 is rotated to the arc-shaped edge of the central wing 131, the central wing 131 exerts a blocking effect on the detent pin 221 and thus pushes the detent pin 221 to move forward, whereby the spring is stretched to produce a pulling force, and the hooks on the bottom plate are located at the rearmost end of the elongated detent groove. When the pull-out and rotating seat 2 continues to rotate to the vertical direction, the detent sliding block moves to a position between the two central wings 131, so that under the pulling force of the tension spring, the detent sliding block moves toward the central rotating rail 13, and thus the end surfaces of the two central wings 131 respectively abut against two inclined surfaces on the end surface of the detent sliding block to form the blocking effect. This creates damping when the pull-out and rotating seat 2 is rotated to a pull-out position, thereby enabling the pull-out and rotating seat 2 to quickly locate the pull-out position. When the pull-out and rotating seat 2 is required to continue to rotate, an external force is applied to the pull-out and rotating seat 2 to push the pull-out and rotating seat 2, so that the detent sliding block slides away from the central rotating rail 13 under the pushing force.

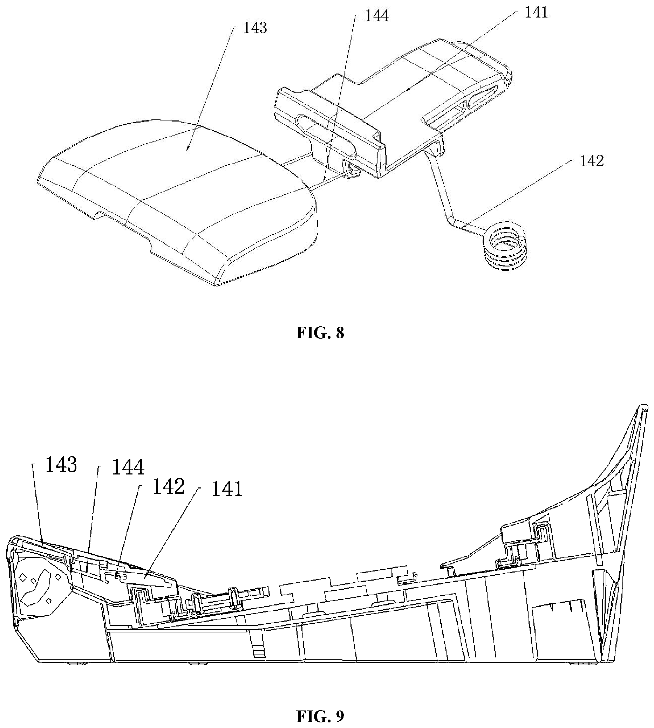

Preferably, as shown in FIG. 8 and FIG. 9, the unlocking structure 14 includes an unlocking pin 141 and an unlocking button 143. The unlocking pin 141 is disposed in an accommodating cavity at the front inner side of the base 1, and is slidable within the accommodation cavity. The front end of the unlocking pin 141 is connected to the unlocking button 143 through a connection strap 144. A torsion spring 142 is disposed on a side of the unlocking pin 141, and one end of the torsion spring 142 abuts against the unlocking pin 141. In use, under the pressure of the torsion spring 142, the unlocking pin 141 extends out toward the pull-out and rotating seat 2 and inserts into the unlocking groove formed on the pull-out and rotating seat 2, so as to restrict the rotation of the pull-out and rotating seat 2. When unlocking is required, the unlocking button 143 is pulled to drive the unlocking pin 141 to move forward through the connection strap 144, so as to disengage the unlocking pin 141 from the unlocking groove, and in this case, the torsion spring 142 accumulates elastic potential energy, thereby releasing the restriction on the rotational movement of the pull-out and rotating seat 2. When re-locking is required, only the unlocking button 143 needs to be released, so that the unlocking latch pin 141 extends out from the surface of the base 1 and inserts into the unlocking groove under the acting force of the torsion spring 142, thereby achieving automatic locking.

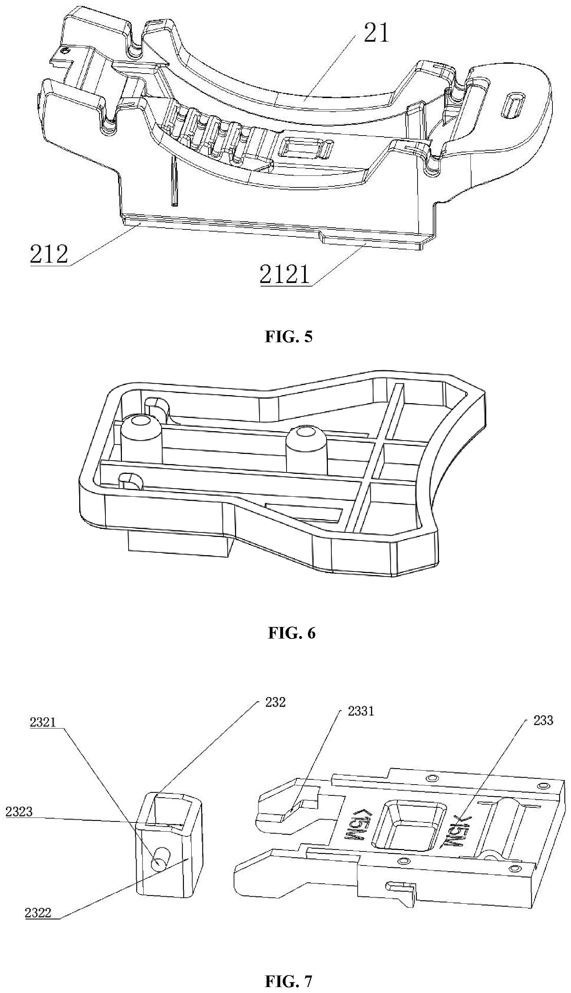

Preferably, as shown in FIG. 7, a reverse limiting assembly 23 is further disposed on the pull-out and rotating seat 2. The reverse limiting assembly 23 includes a reverse limiting button 233 and a reverse limiting pin 232. The reverse limiting button 233 is disposed on the pull-out cover plate at a position corresponding to the central rotating rail 13, and is slidably connected to the pull-out cover plate through a sliding track. Stop blocks are disposed at the front and rear ends of the sliding track to limit the sliding distance of the reverse limiting button 233. Two sides of the reverse limiting button 233 extend forward to form pressing portions 2331, and the pressing portion 2331 is formed as an inclined surface. The reverse limiting pin 232 is located at the front side of the reverse limiting button 233, and includes a limiting post 2321 and a limiting body 2322. The limiting posts 2321 are disposed on two sides of the limiting body 2322 and abut against the pressing portion 2331. The limiting body 2322 is cubic and is provided with an accommodation groove 2323 on its upper end. A spring is disposed within the accommodation groove 2323. One end surface of the spring abuts against the bottom surface of the accommodation groove 2323, and the other end surface of the spring abuts against the bottom surface of the pull-out cover plate. In the initial state, the limiting post 2321 is located at the highest position of the inclined surface. Under the pressing force of the pressing portion 2331, the spring on the limiting body 2322 is kept compressed. In use, when the rotation angle of the pull-out and rotating seat 2 ranges from 0° to 90° or from 270° to 360°, the reverse limiting pin 232 is located above the raised rib on half of the central rotating rail 13 and cannot move downward due to the limitation of the rib. When the rotation angle of the pull-out and rotating seat 2 ranges from 90° to 279°, no raised rib exists below the reverse limiting pin 232. In this case, the reverse limiting button 233 is toggled to enable the limiting post 2321 to be in the lowest position of the inclined surface, so that the limiting body 2322 moves downward under the elastic force of the spring, and the reverse limiting pin 232 moves downwards to the recessed part of the central rotating rail 13. In this case, the vertical edge of the rib, i.e., the above-described vertical plate, blocks the reverse limiting pin 232 to prevent reverse rotation of the pull-out and rotating seat 2, thereby achieving reverse limiting. Conversely, the restriction can be released in the same manner.

In the above description, the embodiments of the present disclosure are merely described, which should not be considered as limitations of the patent scope of the present disclosure. All equivalent structures or equivalent process transformations made by using the specification and the drawings of the present application are directly or indirectly applied to other related technical fields, which are included within the scope of patent protection of the present application.

## Claims

1. A pull-out and rotating base device of a child seat, comprising a base (1), a pull-out and rotating seat (2), and an unlocking structure (14);
wherein the pull-out and rotating seat (2) is disposed above the base (1) and cooperates with the base (1), the pull-out and rotating seat (2) is rotatable relative to the base (1), and when the pull-out and rotating seat (2) is rotated to left and right sides of the base (1), the pull-out and rotating seat (2) is translatable relative to the base (1); and
the unlocking structure (14) is disposed between the base (1) and the pull-out and rotating seat (2), and the unlocking structure (14) is configured to cooperate with the pull-out and rotating seat (2) to release or restrict rotation of the pull-out and rotating seat (2).

2. The pull-out and rotating base device of a child seat of claim 1, wherein a rotating side rail (11) is disposed on the base (1), an opening is formed on each of left and right sides of the rotating side rail (11), a translating side rail (12) is disposed on each of two sides of the opening, and the pull-out and rotating seat (2) cooperates with the rotating side rail (11) and the translating side rail (12).

3. The pull-out and rotating base device of a child seat of claim 2, wherein a first clamping portion (111) is disposed on each of front and rear sides of the rotating side rail (11), a second clamping portion (223) is disposed on each of front and rear sides of the pull-out and rotating seat (2), and the first clamping portion (111) and the second clamping portion (223) cooperate with each other to prevent the pull-out and rotating seat (2) from being separated from the base (1) during rotation.

4. The pull-out and rotating base device of a child seat of claim 3, wherein an upper end of the translating side rail (12) is provided with a ledge portion (121), a side wing (212) is disposed on each of left and right sides of the pull-out and rotating seat (2), and the ledge portion (121) cooperates with the side wing (212) to prevent the pull-out and rotating seat (2) from being separated from the base (1) during translation.

5. The pull-out and rotating base device of a child seat of claim 4, wherein an upper portion of the side wing (212) extends outward to form a limit portion (2121), and when the pull-out and rotating seat (2) is translated to a limit distance, the limit portion (2121) abuts against an inner side surface of the translating side rail (12) to prevent the pull-out and rotating seat (2) from being pulled out excessively.

6. The pull-out and rotating base device of a child seat of claim 4, wherein a central rotating rail (13) is disposed on the base (1), a bottom of the pull-out and rotating seat (2) is provided with a U-shaped groove (224), a curvature of the U-shaped groove (224) is identical to a curvature of the central rotating rail (13), and when the pull-out and rotating seat (2) is retracted, the central rotating rail (13) abuts against the U-shaped groove (224) to prevent the pull-out and rotating seat (2) from translating excessively during retraction.

7. The pull-out and rotating base device of a child seat of claim 6, wherein a central wing (131) is disposed on each of two sides of the central rotating rail (13), a pull-out sliding groove (2241) is disposed on each of two sides of the U-shaped groove (224), and the pull-out sliding groove (2241) and the central wing (131) cooperate with each other to prevent the pull-out and rotating seat (2) from tilting upward during translation.

8. The pull-out and rotating base device of a child seat of claim 7, wherein the bottom of the pull-out and rotating seat (2) is further provided with a detent pin (221), the detent pin (221) is connected to the pull-out and rotating seat (2) through a tension structure, and one side of the detent pin (221) cooperates with left and right sides of the central rotating rail (13), to form damping when the pull-out and rotating seat (2) is rotated to the left and right sides of the pull-out and rotating seat (2), so as to quickly locate a pull-out position.

9. The pull-out and rotating base device of a child seat of claim 1, wherein the unlocking structure (14) comprises an unlocking pin (141) and an unlocking button (143), the unlocking pin (141) is disposed within an accommodation cavity in the base (1), an end of the unlocking pin (141) is connected to the unlocking button (143) through a connection strap (144), a torsion spring (142) is disposed on a side of the unlocking pin (141), an end of the torsion spring (142) abuts against the unlocking pin (141), a unlocking groove is disposed on each of front and rear sides of the pull-out and rotating seat (2), and the unlocking groove is configured to cooperate with the unlocking pin (141) to enable a locking function.

10. The pull-out and rotating base device of a child seat of claim 6, wherein the pull-out and rotating seat (2) is provided with a reverse limiting assembly (23) at a position corresponding to the central rotating rail (13), the reverse limiting assembly (23) includes a reverse limiting button (233) and a reverse limiting pin (232), the reverse limiting button (233) is slidably connected to the pull-out and rotating seat (2), the reverse limiting pin (232) comprises a limiting post (2321) and a limiting body (2322), the limiting post (2321) is disposed on each of two sides of the limiting body (2322) and abuts against an end of the reverse limiting button (233), an upper end of the limiting body (2322) is provided with an accommodation groove (2323), a spring is disposed within the accommodation groove (2323), an end of the spring abuts against a bottom surface of the accommodation groove (2323), and another end of the spring abuts against the pull-out and rotating seat (2); and
when the pull-out and rotating seat (2) is rotated to an angle ranging from 90° to 270°, the reverse limiting button (233) is actuated to push the limiting post (2321) to drive the limiting body (2322) to move downward, so that the limiting body (2322) abuts against an inner edge of the central rotating rail (13) to prevent the pull-out and rotating seat (2) from rotating reversely; and conversely, the limiting body (2322) moves upward away from the central rotating rail (13) to release the restriction on reverse rotation of the pull-out and rotating seat (2).
